# EUROPEAN PATENT APPLICATION

(11) **EP 4 838 432 A1**
(43) Date of publication of application: **11.11.2026**
(21) Application number: 24915679.5
(22) Date of filing: 26.11.2024
(51) Int. Cl.: G06Q 10/04, G06Q 50/06, H02J 3/00, H02J 3/38, H02J 3/46

(54) **FACILITY COMBINATION TYPE OPTIMIZATION DEVICE, FACILITY COMBINATION TYPE OPTIMIZATION METHOD, AND FACILITY COMBINATION TYPE OPTIMIZATION PROGRAM**

(30) Priority: 04.01.2024 JP 2024000268
(71) Applicant: Hitachi, Ltd., Tokyo 100-8280 (JP)
(72) Inventor: KOMAKI, Daisuke, Tokyo 100-8280 (JP); HARAGUCHI, Masashi, Tokyo 100-8280 (JP); TAKAHASHI, Yoshiyasu, Tokyo 100-8280 (JP); ISHIDO, Yumiko, Tokyo 100-8280 (JP); NOMURA, Kenichiro, Tokyo 100-8280 (JP); TAKAHASHI, Hirotaka, Tokyo 100-8280 (JP); TERAYAMA, Hikaru, Tokyo 100-8280 (JP); NISHIDA, Takehisa, Tokyo 100-8280 (JP)
(74) Representative: MERH-IP Matias Erny Reichl Hoffmann Patentanwälte PartG mbB
(86) International application number: PCT/JP2024/041815
(87) International publication number: WO 2025/146756

(57) **Abstract**

A facility combination type optimization device (10) includes: a conversion type facility condition generation unit (11) that uses input and output resource amounts as decision variables and generates a relationship thereof as a constraint condition, for each conversion type facility of a system in which a conversion type facility or an accumulation type facility is combined; an accumulation type facility condition generation unit (12) that uses input and output resource amounts as decision variables and generates a constraint condition that an accumulation resource amount that is a sum of a difference thereof and an accumulation resource amount is equal to or more than a given lower limit value and equal to or less than a given upper limit value, for each accumulation type facility; a network condition generation unit (13) that generates a network constraint condition; an objective function generation unit (14) that generates an objective function related to a key performance indicator for calculating input and output resource amounts; and an optimal plan preparation unit (15) that calculates input and output resource amounts for each time.

## Description

### Technical Field

The present invention relates to a facility combination type optimization device, a facility combination type optimization method, and a facility combination type optimization program.

### Background Art

It is desired to provide customers with energy devices such as generators, storage batteries, electric vehicles, and chargers in an optimal configuration. In providing such a system, it is necessary that key performance indicators (KPIs) that are emphasized by customers can be satisfactorily achieved.

PTL 1 describes an invention of a distributed energy system control device capable of creating an optimal operation plan even though there is a change in device characteristics due to air temperature, water temperature, deterioration of the device, or the like.

### Citation List

### Patent Literature

PTL 1: JP 2006-325336 A

### Summary of Invention

### Technical Problem

It has been difficult to search for an optimal facility configuration that achieves any key performance indicator and to quickly prepare an optimal operation plan.

Therefore, an object of the present invention is to search for an optimal facility configuration in a short time and to prepare an operation plan of the optimal facility in the optimal facility configuration.

### Solution to Problem

In order to solve the above problem, according to the present invention, a facility combination type optimization device includes a conversion type facility condition generation unit that uses at least an input resource amount and an output resource amount for each time point as decision variables, and generates, as a constraint condition, a relationship between the input resource amount and the output resource amount for each conversion type facility, regarding a system in which a conversion type facility that receives one or more types of resources as an input and outputs one or more types of resources, or an accumulation type facility that receives one or more types of resources and outputs the same type of resources, and accumulates a difference therebetween is combined; an accumulation type facility condition generation unit that uses at least the input resource amount and the output resource amount for each time point as decision variables, and generates a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility; a network condition generation unit that generates a network constraint condition that a sum of the same type of output resource amounts from the conversion type facility or the accumulation type facility is equal to or less than a sum of the same type of input resource amounts to another conversion type facility or another accumulation type facility; an objective function generation unit that generates an objective function related to a key performance indicator by using one or more values among the input resource amounts and the output resource amounts; and an optimal plan preparation unit that calculates an input resource amount and an output resource amount of the conversion type facility and the accumulation type facility for each time by using the decision variable and the constraint condition of zero or more of the conversion type facilities generated by the conversion type facility condition generation unit, the decision variable and the constraint condition of zero or more of the accumulation type facilities generated by the accumulation type facility condition generation unit, one or more of the network constraint conditions generated by the network condition generation unit, and the objective function generated by the objective function generation unit.

According to the present invention, a facility combination type optimization method includes: a step of, by a conversion type facility condition generation unit, using at least an input resource amount and an output resource amount for each time point as decision variables, and generating, as a constraint condition, a relationship between the input resource amount and the output resource amount for each conversion type facility, regarding a system in which a conversion type facility that receives one or more types of resources as an input and outputs one or more types of resources, or an accumulation type facility that receives one or more types of resources and outputs the same type of resources, and accumulates a difference therebetween is combined; a step of, by an accumulation type facility condition generation unit, using at least the input resource amount and the output resource amount for each time point as decision variables, and generating a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility; a step of, by a network condition generation unit, generating a network constraint condition that a sum of the same type of output resource amounts from the conversion type facility or the accumulation type facility is equal to or less than a sum of the same type of input resource amounts to another conversion type facility or another accumulation type facility; a step of, by an objective function generation unit, generating an objective function related to a key performance indicator by using one or more values among the input resource amounts and the output resource amounts; and a step of, by an optimal plan preparation unit, calculating an input resource amount and an output resource amount of the conversion type facility and the accumulation type facility for each time by using the decision variable and the constraint condition of zero or more of the conversion type facilities generated by the conversion type facility condition generation unit, the decision variable and the constraint condition of zero or more of the accumulation type facilities generated by the accumulation type facility condition generation unit, one or more of the network constraint conditions generated by the network condition generation unit, and the objective function generated by the objective function generation unit.

According to the present invention, a facility combination type optimization program causes a computer to execute: a procedure of using at least an input resource amount and an output resource amount for each time point as decision variables, and generating, as a constraint condition, a relationship between the input resource amount and the output resource amount for each conversion type facility, regarding a system in which a conversion type facility that receives one or more types of resources as an input and outputs one or more types of resources, or an accumulation type facility that receives one or more types of resources and outputs the same type of resources, and accumulates a difference therebetween is combined; a procedure of using at least the input resource amount and the output resource amount for each time point as decision variables, and generating a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility; a procedure of generating a network constraint condition that a sum of the same type of output resource amounts from the conversion type facility or the accumulation type facility is equal to or less than a sum of the same type of input resource amounts to another conversion type facility or another accumulation type facility; a procedure of generating an objective function related to a key performance indicator by using one or more values among the input resource amounts and the output resource amounts; and a procedure of calculating an input resource amount and an output resource amount of the conversion type facility and the accumulation type facility for each time by using the decision variable and the constraint condition of zero or more of the conversion type facilities generated by the conversion type facility condition generation unit, the decision variable and the constraint condition of zero or more of the accumulation type facilities generated by the accumulation type facility condition generation unit, one or more of the network constraint conditions generated by the network condition generation unit, and the objective function generated by the objective function generation unit.

Other means will be described in the mode for carrying out the invention.

### Advantageous Effects of Invention

According to the present invention, it is possible to search for an optimal facility configuration in a short time and to prepare an operation plan of the optimal facility in the optimal facility configuration.

### Brief Description of Drawings

[FIG. 1] FIG. 1 is a logical configuration diagram of a facility combination type optimization device according to the present embodiment.
[FIG. 2] FIG. 2 is a hardware configuration diagram of the facility combination type optimization device.
[FIG. 3] FIG. 3 is a diagram illustrating an operation of the facility combination type optimization device.
[FIG. 4] FIG. 4 is a diagram illustrating an example of a plant in which facilities are combined.
[FIG. 5] FIG. 5 is an example of a piecewise linear graph.
[FIG. 6] FIG. 6 is an example of a piecewise linear graph.
[FIG. 7] FIG. 7 is a scatter diagram illustrating a relationship between cost and a CO2 emission amount.
[FIG. 8] FIG. 8 is a diagram illustrating a result of an optimized operation plan.

### Description of Embodiments

Hereinafter, modes for carrying out the present invention will be described in detail with reference to the drawings.

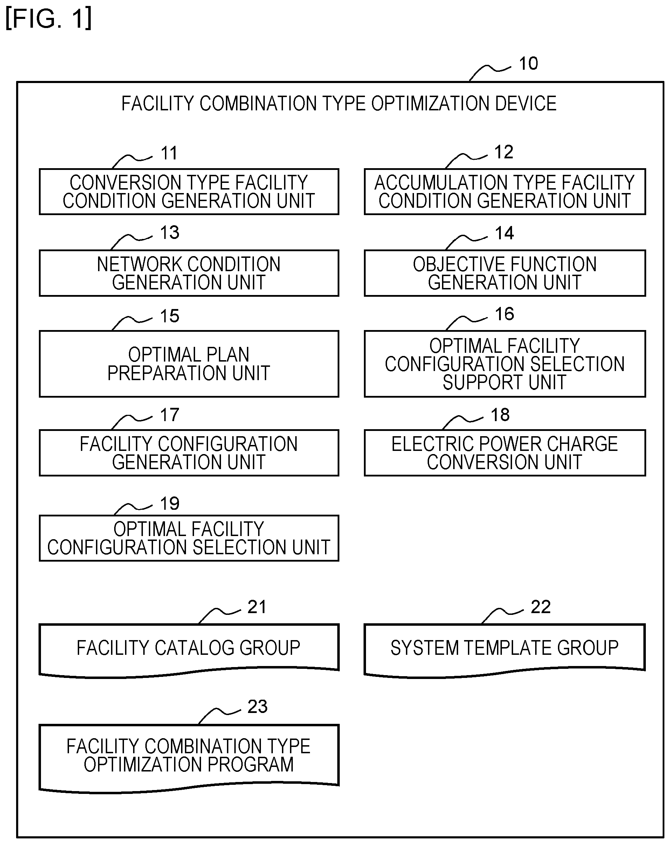

FIG. 1 is a logical configuration diagram of a facility combination type optimization device 10 according to the present embodiment.

The facility combination type optimization device 10 includes a conversion type facility condition generation unit 11, an accumulation type facility condition generation unit 12, a network condition generation unit 13, an objective function generation unit 14, an optimal plan preparation unit 15, an optimal facility configuration selection support unit 16, an optimal facility configuration selection unit 19, a facility configuration generation unit 17, and an electric power charge conversion unit 18 as functional units. The facility combination type optimization device 10 further stores a facility catalog group 21, a system template group 22, and a facility combination type optimization program 23. The facility combination type optimization device 10 virtually generates a system in which a plurality of conversion type facilities and a plurality of accumulation type facilities are connected, and creates a plan for optimizing a key performance indicator of the generated system. Here, the conversion type facility is a facility that converts energy, and is, for example, a photovoltaic panel, a thermal power generator, a gas turbine generator, a gas cogeneration, a wind power generator, or the like. Here, the accumulation type facility selectively stores and releases energy, and is, for example, a storage battery, a gas tank, or the like. Examples of the key performance indicators of the system include power purchase cost, gas procurement cost, and a CO₂ emission amount. Here, a resource has cost [yen] such as electric power [kWh], gas [m³], power purchase cost, and gas procurement cost, and an amount related to power, energy, and the like such as a CO2 emission amount [m³]. The resource is set to an input resource in the case of being input to a facility, and is an output resource in the case of being output from the facility.

The facility catalog group 21 stores specifications of a plurality of conversion type facilities and specifications of a plurality of accumulation type facilities.

The system template group 22 stores a plurality of system templates in which an interconnection relationship of facilities is defined. Here, the system template is a template for configuring a system by applying any of the conversion type facility and the accumulation type facility whose specifications are stored in the facility catalog group 21.

The facility configuration generation unit 17 refers to the system template group 22 and the facility catalog group 21, and virtually generates a system configured by network connection of the conversion type facility or the accumulation type facility.

The conversion type facility condition generation unit 11 generates a decision variable and a constraint condition indicating the behavior of a conversion type facility. Here, the decision variable is a controllable variable. The constraint condition is a condition that gives a possible range of the decision variable.

The accumulation type facility condition generation unit 12 generates a decision variable and a constraint condition indicating the behavior of an accumulation type facility.

The network condition generation unit 13 generates a network constraint condition, and generates a network condition on a constraint condition that the sum of an input and an output of the conversion type facility is equal to the sum of an input and an output of the accumulation type facility.

The objective function generation unit 14 generates an objective function related to the key performance indicator by using one or more values among the input/output resource amounts of the conversion type facility and the accumulation type facility.

The optimal plan preparation unit 15 calculates the configuration of one or more facilities and the input/output of a network from the decision variable and the constraint condition of the conversion type facility or the decision variable and the constraint condition of the accumulation type facility, the network constraint condition, and the objective function, and prepares an optimal plan. The optimal plan preparation unit 15 calculates an optimized plan from the decision variable, the constraint condition, and the objective function by mathematical optimization.

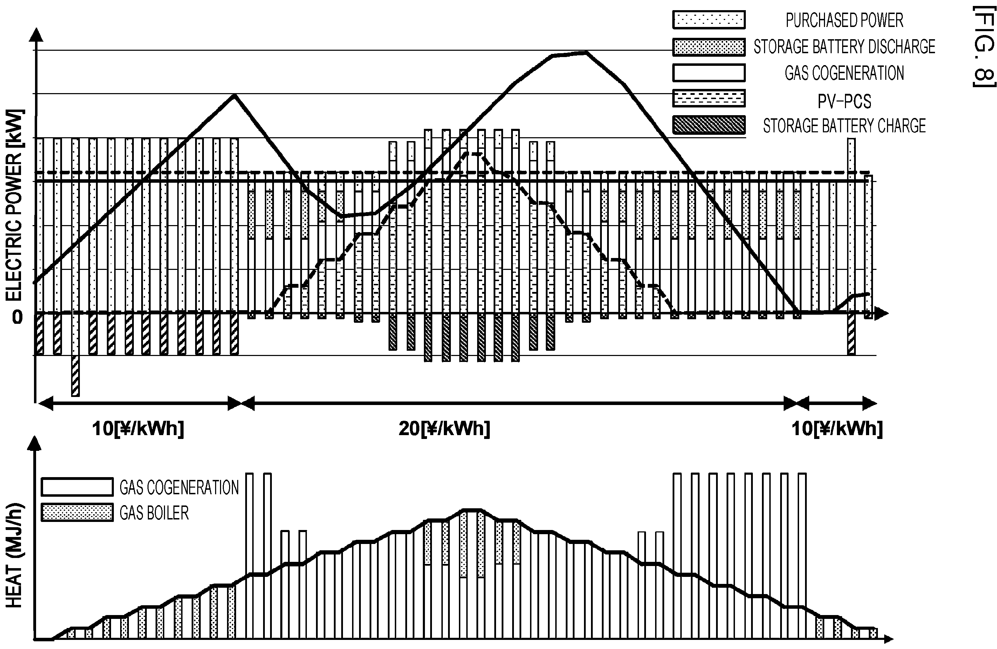

Here, the optimized plan is an operation parameter of the facility such as the amount of input/output resources for each time section, or a load factor for each time section that becomes the input/output resource amount as illustrated in FIG. 8.

The optimal facility configuration selection support unit 16 displays a plurality of key performance indicators calculated by the optimal plan preparation unit 15 in a comparable form for each facility configuration of a plurality of systems generated by the facility configuration generation unit 17. As a result, selection of an optimal facility configuration is supported. Note that the optimal facility configuration selection support unit 16 is not essential and may be omitted.

The optimal facility configuration selection unit 19 compares the key performance indicators calculated by the optimal plan preparation unit 15 for each facility configuration of a plurality of systems generated by the facility configuration generation unit 17, and selects a facility configuration for which the most excellent key performance indicator is calculated. Note that, in FIG. 1, the optimal facility configuration selection unit 19 is provided at a subsequent stage of the optimal facility configuration selection support unit 16, but the reversed configuration may be adopted.

The electric power charge conversion unit 18 calculates a relationship between electric power with different power charges for each time section and a charge. In a case where any of the input resource and the output resource of the conversion type facility and the input resource and the output resource of the accumulation type facility is power, the electric power charge conversion unit 18 calculates a relationship between electric power and a charge. By mounting the electric power charge conversion unit 18 as an add-in, it is possible to easily examine various charge plans indicating the relationship between electric power and a charge.

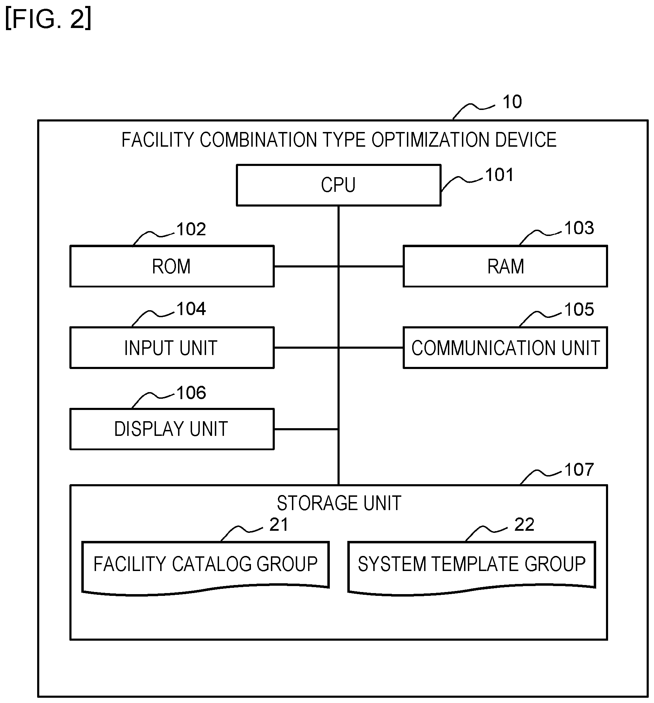

FIG. 2 is a hardware configuration diagram of the facility combination type optimization device 10.

The facility combination type optimization device 10 optimizes a system configured by combining facilities. The facility combination type optimization device 10 is a computer including a CPU (Central Processing Unit) 101, a ROM (Read Only Memory) 102, and a RAM (Random Access Memory) 103. The facility combination type optimization device 10 prepares an optimal plan in a facility combination type, and searches for an optimal facility configuration in a short time. Here, the optimal facility configuration refers to, for example, a facility configuration capable of achieving a performance evaluation index designated by a customer.

Note that the expression "optimization" is not necessarily limited to including an optimal facility configuration, and may include a facility configuration that is optimized such that the key performance indicators satisfy predetermined conditions.

The CPU 101 is a central processing unit, and implements each functional unit by executing a program and accessing data stored in the ROM 102 or the RAM 103.

The ROM 102 is a nonvolatile read-only memory, and stores various types of data, a BIOS (Basic I/O System), and the like. The RAM 103 is a volatile readable/writable memory, and temporarily stores various types of data and programs.

The facility combination type optimization device 10 further includes an input unit 104, a communication unit 105, a display unit 106, and a storage unit 107.

The input unit 104 is, for example, a keyboard, a mouse, a touch panel, or the like, and is a part for a user to input data by operating the facility combination type optimization device 10.

The communication unit 105 is, for example, a network interface card, and is a part for communicating with other devices and an on-demand order placement platform via a network.

The display unit 106 is, for example, a liquid crystal display or the like, and displays characters, figures, images, and the like.

The storage unit 107 is, for example, a hard disk drive, an SSD (Solid State Drive), or the like, and stores relatively large amounts of data and programs. The storage unit 107 stores the facility catalog group 21, the system template group 22, and the facility combination type optimization program 23. The CPU 101 executes the facility combination type optimization program 23 to embody the various functional units illustrated in FIG. 1.

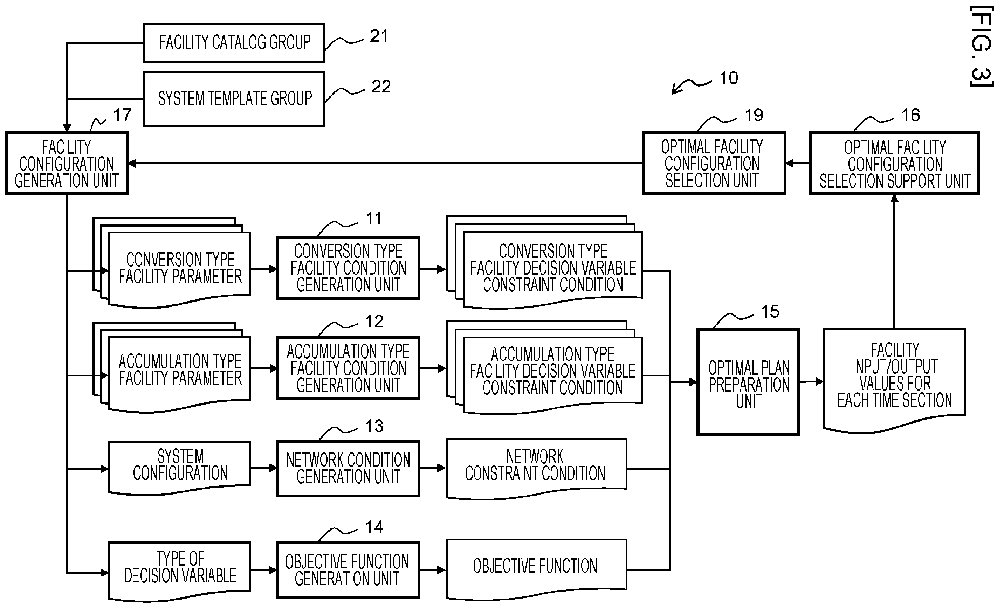

FIG. 3 is a diagram illustrating an operation of the facility combination type optimization device 10.

The facility catalog group 21 provides specification information of a plurality of conversion type facilities and a plurality of accumulation type facilities to the facility configuration generation unit 17. The system template group 22 provides any of system templates in which the interconnection relationship of the facilities is defined, to the facility configuration generation unit 17. The system template is provided for applying any conversion type facility or accumulation type facility. When a designer prepares a system template in advance and applies a facility to the system template, a system having a suitable facility configuration can be generated in a short time.

The facility configuration generation unit 17 applies the conversion type facility or the accumulation type facility of the facility catalog group 21 to the system template, and virtually generates a facility configuration of a system configured by network connection of the conversion type facility or the accumulation type facility. The facility configuration generation unit 17 outputs the parameter of the conversion type facility to the conversion type facility condition generation unit 11, outputs the parameter of the accumulation type facility to the accumulation type facility condition generation unit 12, outputs the system configuration to the network condition generation unit 13, and outputs the type of the decision variable to the objective function generation unit 14.

The conversion type facility condition generation unit 11 generates the decision variable and the constraint condition indicating the behavior of the conversion type facility based on the parameter of the conversion type facility, and outputs the generated decision variable and constraint condition to the optimal plan preparation unit 15. That is, for each conversion type facility that receives one or more types of resources as an input and outputs one or more types of resources, the conversion type facility condition generation unit 11 uses at least an input resource amount and an output resource amount for each time point as decision variables, and generates a relationship between the input resource amount and the output resource amount as a constraint condition.

The conversion type facility condition generation unit 11 receives an input of a piecewise linear conversion map for converting the input resource amount of the conversion type facility into the output resource amount. As a result, the output resources of the conversion type facility can be calculated more quickly. The conversion type facility receives resources of one or more types of energy as an input and outputs one or more types of resources. The conversion type facility is, for example, gas cogeneration (generator) that converts gas as an input resource into electric power as an output resource, a power conditioner that converts DC power as an input resource into AC power as an output resource, a photovoltaic panel that converts sunlight as an input resource into DC power as an output resource, or the like.

The accumulation type facility condition generation unit 12 generates the decision variable and the constraint condition indicating the behavior of the accumulation type facility based on the parameter of the accumulation type facility, and outputs the generated decision variable and constraint condition to the optimal plan preparation unit 15. That is, the accumulation type facility condition generation unit 12 uses an input resource amount and an output resource amount at least for each time as decision variables, and generates a constraint condition that an accumulation resource amount that is the sum of the difference between the input resource amount and the output resource amount and the accumulation resource amount at each time point is equal to or more than a given lower limit value and equal to or less than a given upper limit value, for each accumulation type facility that outputs the same type of resources with one or more types of resources as inputs, and accumulates a difference therebetween. Here, the accumulation type facility is, for example, a storage battery in a case where electric power is used as the input and output resources, for example, a high-pressure steam tank in a case where steam is used as the input and output resources, or the like.

The network condition generation unit 13 generates a network constraint condition based on the system configuration and outputs the network constraint condition to the optimal plan preparation unit 15. The network condition generation unit 13 has a unit conversion function between the input resource amount and the output resource amount of the conversion type facility.

The objective function generation unit 14 generates an objective function for calculating the input and output resource amounts of the conversion type facility or the accumulation type facility from the decision variable. That is, the network condition generation unit 13 generates the constraint condition that the sum of the same type of output resource amounts from the conversion type facility or the accumulation type facility is equal to or less than the sum of the input resource amounts of the same type to another conversion type facility or another accumulation type facility, for the network in which the conversion type facility or the accumulation type facility is combined.

The optimal plan preparation unit 15 prepares an optimal plan for operating each facility and calculates the configuration of one or more facilities and the input/output of a network from the decision variable and the constraint condition of the conversion type facility or the decision variable and the constraint condition of the accumulation type facility, the network constraint condition, and the objective function. That is, the optimal plan preparation unit 15 calculates the input resource amount and the output resource amount for each time of the conversion type facility and the accumulation type facility, which maximize or minimize the objective function by mathematical optimization and by using the decision variable and the constraint condition of 0 or more conversion type facilities generated by the conversion type facility condition generation unit 11, the decision variable and the constraint condition of 0 or more accumulation type facilities generated by the accumulation type facility condition generation unit 12, the decision variable and the constraint condition of one or more networks generated by the network condition generation unit 13, and the objective function generated by the objective function generation unit 14.

The facility configuration evaluation unit 16 calculates the input/output of each facility of the facility configuration generated by the facility configuration generation unit 17 and the input/output of the network for each time section, and evaluates the input/output by the key performance indicator. If the key performance indicator satisfies the predetermined condition, the facility configuration evaluation unit 16 proposes the facility configuration to the user, and if the key performance indicator does not satisfy the predetermined condition, the facility configuration generation unit 17 generates a system having another facility configuration. As a result, it is possible to search for a system having an optimal facility configuration in which the key performance indicator satisfies a predetermined condition in a short time.

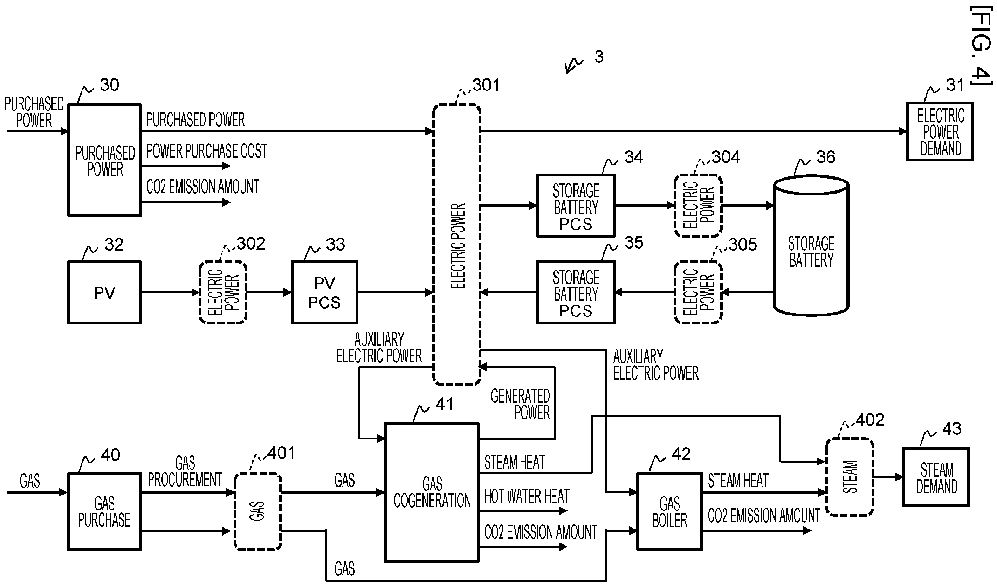

FIG. 4 is a diagram illustrating an example of a system 3 in which facilities are combined.

The system 3 includes, as a power supply network, a power selling facility 30, a photovoltaic panel 32, a photovoltaic panel power conditioner 33, a storage battery 36, and storage battery power conditioners 34 and 35, and supplies electric power to an electric power demand 31. Note that, in the drawing, the power conditioner is abbreviated as "PCS", and the photovoltaic panel is abbreviated as "PV". In a power supply network of the system 3, there are an electric power node 301, an electric power node 302, an electric power node 304, and an electric power node 305. The user defines or inputs a power demand amount for each time section in advance, as the electric power demand 31.

Among these facilities, the power selling facility 30, the photovoltaic panel 32, the photovoltaic panel power conditioner 33, and the storage battery power conditioners 34 and 35 are conversion type facilities that receive one or more types of resources as inputs and output one or more types of resources. The storage battery 36 is an accumulation type facility that outputs the same type of resources with one or more types of resources as inputs and accumulates a difference therebetween.

The electric power node 301 bundles together the purchased power purchased from the power selling facility 30, the generated power output from the photovoltaic panel power conditioner 33, and the discharge power output from the storage battery power conditioner 35, supplies electric power to the electric power demand 31, and outputs the electric power to the storage battery power conditioner 34.

Electric power purchased is supplied to the power selling facility 30, the electric power purchased is output to the electric power node 301, and the power selling cost and the CO₂ emission amount are output. When sunlight is input to the photovoltaic panel 32, DC power is supplied to the photovoltaic panel power conditioner 33 via the electric power node 302. The photovoltaic panel power conditioner 33 converts DC power into AC power and supplies the AC power to the electric power node 301.

The storage battery power conditioner 34 converts AC power into DC power, and supplies the DC power to the storage battery 36 via the electric power node 304. The DC power output from the storage battery 36 is supplied to the storage battery power conditioner 35 via the electric power node 305. The storage battery power conditioner 35 converts DC power into AC power, and supplies the AC power to the electric power node 301.

The system 3 further includes a gas purchase facility 40, a gas cogeneration 41, and a gas boiler 42 as a gas supply network, and supplies steam to a steam demand 43 via a steam supply network. In the gas supply network of the system 3, there is a gas node 401. A steam node 402 is present in the steam supply network of the system 3. The gas purchase facility 40, the gas cogeneration 41, and the gas boiler 42 are conversion type facilities that receive one or more types of resources as inputs and output one or more types of resources. The user defines in advance or inputs the demand for each time section, as the steam demand 43.

Gas procured by the gas purchase facility 40 is input to the gas node 401, and the gas is supplied to the gas cogeneration 41 and the gas boiler 42.

The gas cogeneration 41 supplies generated electric power to the electric power node 301 by using the supplied gas and auxiliary machine power as inputs, supplies steam to the steam demand 43 by supplying steam heat to the steam node 402, and further discharges hot water heat and CO₂.

The gas boiler 42 receives the supplied gas and auxiliary machine power, supplies steam heat to the steam node 402, and further discharges CO₂. The steam heat supplied to the steam node 402 is ultimately supplied to the steam demand 43.

A system including the power supply network, the gas supply network, and the steam supply network is stored in a system template. The conversion type facility or accumulation type facility can be applied to these system templates to generate a facility configuration of the system.

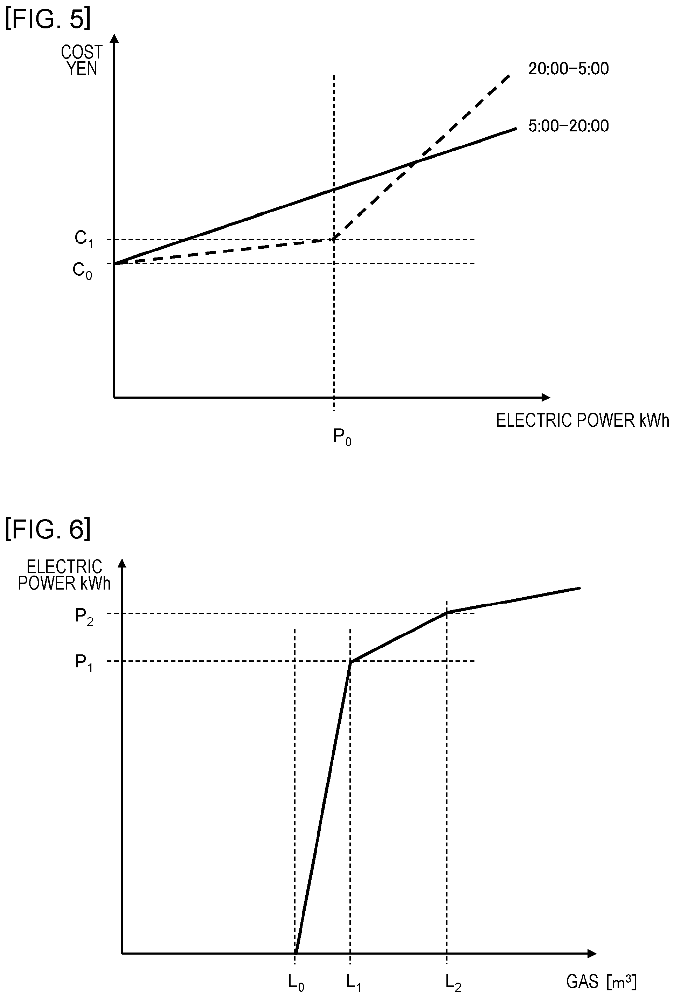

FIG. 5 is an example of a piecewise linear graph. The horizontal axis of the graph represents electric power. The vertical axis of the graph indicates the cost of electric power.

When the electric power is P₀ or less, the electric power cost is a linear function for the electric power. When the electric power exceeds P₀, the electric power cost becomes a linear function with respect to the electric power, but a change rate thereof is larger than that when the electric power is P₀ or less. When the electric power is P₀, the electric power cost is C₁. When the electric power is 0, the electric power cost is C₀.

Such a piecewise linear function requires less computational complexity than a higher-order polynomial, and can suitably approximate the higher-order polynomial.

FIG. 6 is an example of a piecewise linear graph. The horizontal axis of the graph indicates the amount of gas. The vertical axis of the graph represents electric power.

When the gas amount is equal to or more than L₀ and equal to or less than L₁, the electric power is a linear function for the gas amount. When the gas amount is equal to or more than L₁ and equal to or less than L₂, the electric power is a linear function with respect to the gas amount, but a change rate thereof is smaller than that when the gas amount is equal to or more than L₀ and equal to or less than L₁. When the gas amount is equal to or more than L₂, the electric power is a linear function with respect to the gas amount, but the change rate is smaller than when the gas amount is equal to or more than L₀ and equal to or less than L₁ or when the gas amount is equal to or more than L₁ and equal to or less than L₂.

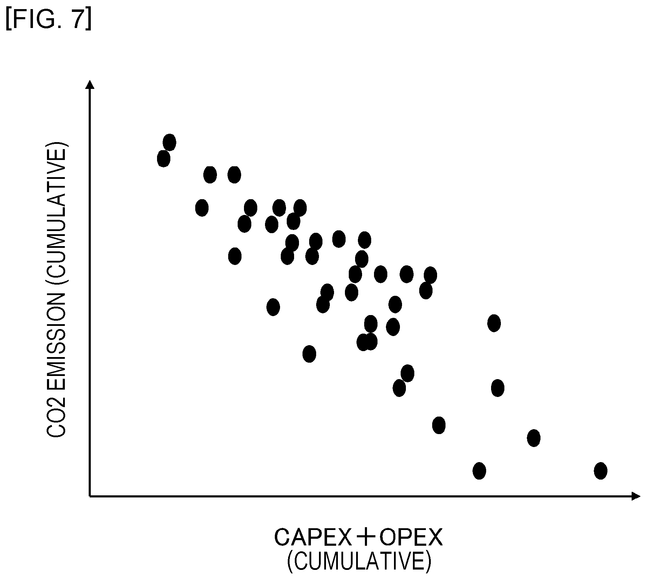

FIG. 7 is a scatter diagram illustrating a relationship between the cost and the CO₂ emission amount.

Of CAPEX+OPEX on the horizontal axis of the scatter diagram, CAPEX is capital expenditure, and refers to capital investment and initial cost. OPEX is an abbreviation of Operating Expense or Operating Expenditure, and is a generic term for costs required continuously in business operation. The overall cost is indicated by the sum of CAPEX and OPEX. The vertical axis of the scatter diagram indicates the amount of CO₂ emission.

The scatter diagram of FIG. 7 displays a plurality of key performance indicators KPIs (here, the relationship between CAPEX+OPEX and the CO₂ emission amount) in a comparable form. To reduce CO₂ emissions, CAPEX+OPEX increases. When CAPEX+OPEX is reduced, the CO₂ emission amount is increased. Therefore, it is possible to compare and select which value is adopted based on the key performance indicator KPI.

FIG. 8 is a graph illustrating a result of the optimized operation plan.

The horizontal axis of the graph indicates time. The vertical axis of the upper graph represents electric power. The vertical axis of the lower graph represents the amount of heat.

The initial period when the purchase price is as low as 10 [yen/KWh] in the graph is, for example, from 0:00 AM to 8:00 AM, and all the electric power is covered by the purchased electric power. Charging power to the storage battery PCS is supplied by the purchased electric power.

The high purchase price of 20 [yen/KWh] period is, for example, from 8:00 AM to 10:00 PM Initially, the output of the PV-PCS (solar power conditioner) is insufficient, and the insufficient power is compensated by the discharge of the storage battery PCS, the gas cogeneration power generation, and the purchased power. Since steam demand is generated at this time, steam of the gas boiler is supplied.

When the output of the PV-PCS (solar power conditioner) increases over time, the amount of electric power to be compensated for the insufficiency gradually decreases. At this time, there is a period in which the storage battery PCS is charged by the purchased electric power and the gas cogeneration power generation. At this time, since the steam demand is gradually increasing, both the steam of the gas cogeneration and the steam of the gas boiler are supplied.

When the output of the PV-PCS (solar power conditioner) decreases over time, the insufficient power is compensated again by the discharge of the storage battery PCS, the gas cogeneration power generation, and the purchased power. Here, as indicated by the solid line in the upper graph, the storage battery PCS is discharged until the charge amount thereof becomes zero. The steam demand at this time is covered by the steam of gas cogeneration.

The period during which the purchase price decreased to 10 [yen/KWh] is, for example, from 22:00 to 24:00, and all the electric power is covered by the purchased power. Charging power to the storage battery PCS is supplied by the purchased electric power. Since steam demand is generated at this time, steam of the gas boiler is supplied.

According to the present invention, it is possible to quickly propose an optimal configuration of energy devices such as a generator, a storage battery, an electric vehicle, and a charger for a KPI that is emphasized by a customer. It is possible to deploy a planning system for operation at a high speed.
[1] A facility combination type optimization device including:
   a conversion type facility condition generation unit (11) that uses at least an input resource amount and an output resource amount for each time point as decision variables, and generates, as a constraint condition, a relationship between the input resource amount and the output resource amount for each conversion type facility, regarding a system (3) in which a conversion type facility (the photovoltaic panel 32, the photovoltaic panel power conditioner 33, the gas cogeneration 41, the storage battery power conditioners 34 and 35, and the gas boiler 42) that receives one or more types of resources as an input and outputs one or more types of resources, or an accumulation type facility (storage battery 36) that receives one or more types of resources and outputs the same type of resources, and accumulates a difference therebetween is combined;
   an accumulation type facility condition generation unit (12) that uses at least the input resource amount and the output resource amount for each time point as decision variables, and generates a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility;
   a network condition generation unit (13) that generates a network constraint condition that a sum of the same type of output resource amounts from the conversion type facility or the accumulation type facility is equal to or less than a sum of the same type of input resource amounts to another conversion type facility or another accumulation type facility;
   an objective function generation unit (14) that generates an objective function related to a key performance indicator by using one or more values among the input resource amounts and the output resource amounts; and
   an optimal plan preparation unit (15) that calculates an input resource amount and an output resource amount of the conversion type facility and the accumulation type facility for each time by using the decision variable and the constraint condition of zero or more of the conversion type facilities generated by the conversion type facility condition generation unit (11), the decision variable and the constraint condition of zero or more of the accumulation type facilities generated by the accumulation type facility condition generation unit (12), one or more of the network constraint conditions generated by the network condition generation unit (13), and the objective function generated by the objective function generation unit (14).
      According to [1], it is possible to search for an optimal facility configuration in a system in which a conversion type facility and an accumulation type facility are combined, in a short time.
[2] The facility combination type optimization device according to [1], in which
   the conversion type facility condition generation unit (11) receives an input of a piecewise linear conversion map for converting an input resource amount (DC power, AC power, gas, and sunlight) of the conversion type facility into an output resource amount (DC power, AC power, and steam).
   According to [2], since the input/output characteristics of the conversion type facility are indicated by the piecewise linear conversion map, it is possible to reduce and quickly calculate the calculation amount of simulation of the input/output characteristics.
[3] The facility combination type optimization device according to [1], in which
   the conversion type facility receives resources of one or more types of energy (DC power, AC power, gas, sunlight) as inputs and outputs resources of one or more types (DC power, AC power, steam).
   According to [3], it is possible to easily calculate the optimal facility configuration of the system (3) including the generator, the power conditioner, and the like that mutually convert various resources.
[4] The facility combination type optimization device according to [1], in which
   the accumulation type facility receives resources of one or more types of energy as an input and outputs the same type of resources, and accumulates a difference therebetween.
   According to [4], it is possible to easily calculate the optimal facility configuration of the system (3) including the accumulation type facility represented by the storage battery (36) and the like.
[5] The facility combination type optimization device according to [1], in which
   the network condition generation unit (13) has a unit conversion function between the input resource amount and the output resource amount of the conversion type facility.
   According to [5], even in a case where the input/output unit system of the conversion type facility is different, simulation of the facility input/output of the system (3) is possible.
[6] The facility combination type optimization device according to [1], in which
   any one of the input resource and the output resource of the conversion type facility and the input resource and the output resource of the accumulation type facility is electric power, and
   the facility combination type optimization device further comprises
   an electric power charge conversion unit (18) that calculates a relationship between electric power with different electric power charges for each time section and a charge.
      According to [6], even though an electric power company changes an electric power charge plan for each time section, the change can be local.
[7] The facility combination type optimization device according to [1], further including:
   a facility configuration generation unit (17) that generates a facility configuration of a system in which a conversion type facility or an accumulation type facility is combined.
   According to [7], it is possible to easily calculate the optimal facility configuration of the system (3) in which the conversion type facility or the accumulation type facility is combined.
[8] The facility combination type optimization device according to [7], further comprising:
   a system template group (22) for applying any conversion type facility or any accumulation type facility; and
   a facility catalog group (21) related to a conversion type facility or an accumulation type facility to be applied to any of the system template group (22).
      According to [8], since the system template group (22) and the facility catalog group (21) corresponding to any one of the system template group are included, it is possible to easily and quickly generate the variation of the facility configuration of the system (3).
[9] The facility combination type optimization device according to [8], in which
   the facility configuration generation unit (17) generates the facility configuration of the system by applying any conversion type facility or any accumulation type facility in the facility catalog group (21) to any of the system template group (22).
   According to [9], the facility configuration generation unit (17) can quickly generate the variation of the facility configuration of the system (3) by applying the facility of the facility catalog group (21) to any one of the system template group (22).
[10] The facility combination type optimization device according to [7], in which
   the facility configuration generation unit (17) includes a facility catalog group related to a conversion type facility or an accumulation type facility, and generates a facility configuration of a system by selecting and combining one or more facilities from the facility catalog group.
   According to [10], it is possible to generate a combination of facility configurations of the system from the facility catalog group.
[11] The facility combination type optimization device according to [7], further including:
   an optimal facility configuration selection unit (19) that compares key performance indicators calculated by the optimal plan preparation unit (15) for each of facility configurations of a plurality of systems generated by the facility configuration generation unit (17), and selects a facility configuration for which the most excellent key performance indicator is calculated.
   According to [11], it is possible to select the most excellent facility configuration based on the key performance indicator related to the facility configuration of the system.
[12] The facility combination type optimization device according to claim [7], further including:
   an optimal facility configuration selection support unit (16) that displays a plurality of key performance indicators calculated by the optimal plan preparation unit (15) in a comparable form for each facility configuration of a plurality of systems generated by the facility configuration generation unit (17).
   According to [12], it is possible to support selection of the facility configuration of the system based on the key performance indicator.
[13] A facility combination type optimization method including:
   a step of, by a conversion type facility condition generation unit (11), using at least an input resource amount and an output resource amount for each time point as decision variables, and generating, as a constraint condition, a relationship between the input resource amount and the output resource amount for each conversion type facility, regarding a system (3) in which a conversion type facility that receives one or more types of resources as an input and outputs one or more types of resources, or an accumulation type facility that receives one or more types of resources and outputs the same type of resources, and accumulates a difference therebetween is combined;
   a step of, by an accumulation type facility condition generation unit (12), using at least the input resource amount and the output resource amount for each time point as decision variables, and generating a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility;
   a step of, by a network condition generation unit (13), generating a network constraint condition that a sum of the same type of output resource amounts from the conversion type facility or the accumulation type facility is equal to or less than a sum of the same type of input resource amounts to another conversion type facility or another accumulation type facility;
   a step of, by an objective function generation unit (14), generating an objective function related to a key performance indicator by using one or more values among the input resource amounts and the output resource amounts; and
   a step of, by an optimal plan preparation unit (15), calculating an input resource amount and an output resource amount of the conversion type facility and the accumulation type facility for each time by using the decision variable and the constraint condition of zero or more of the conversion type facilities generated by the conversion type facility condition generation unit (11), the decision variable and the constraint condition of zero or more of the accumulation type facilities generated by the accumulation type facility condition generation unit (12), one or more of the network constraint conditions generated by the network condition generation unit (13), and the objective function generated by the objective function generation unit (14).
      According to [13], it is possible to search for an optimal facility configuration in a system in which a conversion type facility and an accumulation type facility are combined, in a short time.
[14] A facility combination type optimization program for causing a computer to execute:
   a procedure of using at least an input resource amount and an output resource amount for each time point as decision variables, and generating, as a constraint condition, a relationship between the input resource amount and the output resource amount for each conversion type facility, regarding a system in which a conversion type facility that receives one or more types of resources as an input and outputs one or more types of resources, or an accumulation type facility that receives one or more types of resources and outputs the same type of resources, and accumulates a difference therebetween is combined;
   a procedure of using at least the input resource amount and the output resource amount for each time point as decision variables, and generating a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility;
   a procedure of generating a network constraint condition that a sum of the same type of output resource amounts from the conversion type facility or the accumulation type facility is equal to or less than a sum of the same type of input resource amounts to another conversion type facility or another accumulation type facility;
   a procedure of generating an objective function related to a key performance indicator by using one or more values among the input resource amounts and the output resource amounts; and
   a procedure of calculating an input resource amount and an output resource amount of the conversion type facility and the accumulation type facility for each time by using the decision variable and the constraint condition of zero or more of the conversion type facilities generated by the conversion type facility condition generation unit, the decision variable and the constraint condition of zero or more of the accumulation type facilities generated by the accumulation type facility condition generation unit, one or more of the network constraint conditions generated by the network condition generation unit, and the objective function generated by the objective function generation unit.
      According to [14], it is possible to search for an optimal facility configuration in a system in which a conversion type facility and an accumulation type facility are combined, in a short time.

### (Modification Examples)

The present invention is not limited to the above described embodiment, and various modification examples may be provided. For example, the above embodiment is described in detail in order to explain the present invention in an easy-to-understand manner, and the above embodiment is not necessarily limited to a case including all the described configurations. Some components in one embodiment can be replaced with the components in another embodiment, and the configuration of another embodiment can be added to the configuration of one embodiment. Regarding some components in the embodiments, other components can also be added, deleted, and replaced.

Some or all of the configurations, functions, functional units, processing means, and the like may be realized in hardware such as an integrated circuit, for example. The above-described respective configurations, functions, and the like may be realized by software by the processor interpreting and executing a program for realizing the respective functions. Information such as a program, a table, and a file for implementing each function can be stored in a recording device such as a memory, a hard disk, and an SSD (Solid State Drive), or a recording medium such as a flash memory card and a DVD (Digital Versatile Disk).

In each embodiment, control lines and information lines considered necessary for the descriptions are illustrated, and not all the control lines and the information lines in the product are necessarily shown. In practice, it may be considered that almost all configurations are connected to each other.

### Reference Signs List

- 10: facility combination type optimization device
- 11: conversion type facility condition generation unit
- 12: accumulation type facility condition generation unit
- 13: network condition generation unit
- 14: objective function generation unit
- 15: optimal plan preparation unit
- 16: optimal facility configuration selection support unit
- 17: facility configuration generation unit
- 18: electric power charge conversion unit
- 19: optimal facility configuration selection unit
- 21: facility catalog group
- 22: system template group
- 23: facility combination type optimization program
- 101: CPU
- 102: ROM
- 103: RAM
- 104: input unit
- 105: communication unit
- 106: display unit
- 107: storage unit
- 3: system
- 30: power selling facility
- 31: electric power demand
- 32: photovoltaic panel
- 33: photovoltaic panel power conditioner
- 35,: 34 storage battery power conditioner
- 36: storage battery
- 301, 302, 304, 305: electric power node
- 40: gas purchase facility
- 41: gas cogeneration
- 42: gas boiler
- 43: steam demand
- 401: gas node
- 402: steam node

## Claims

1. A facility combination type optimization device comprising:
a conversion type facility condition generation unit that uses at least an input resource amount and an output resource amount for each time point as decision variables, and generates, as a constraint condition, a relationship between the input resource amount and the output resource amount for each conversion type facility, regarding a system in which a conversion type facility that receives one or more types of resources as an input and outputs one or more types of resources, or an accumulation type facility that receives one or more types of resources and outputs the same type of resources, and accumulates a difference therebetween are combined;
an accumulation type facility condition generation unit that uses at least the input resource amount and the output resource amount for each time point as decision variables, and generates a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility;
a network condition generation unit that generates a network constraint condition that a sum of the same type of output resource amounts from the conversion type facility or the accumulation type facility is equal to or less than a sum of the same type of input resource amounts to another conversion type facility or another accumulation type facility;
an objective function generation unit that generates an objective function related to a key performance indicator by using one or more values among the input resource amounts and the output resource amounts; and
an optimal plan preparation unit that calculates an input resource amount and an output resource amount of the conversion type facility and the accumulation type facility for each time by using the decision variable and the constraint condition of zero or more of the conversion type facilities generated by the conversion type facility condition generation unit, the decision variable and the constraint condition of zero or more of the accumulation type facilities generated by the accumulation type facility condition generation unit, one or more of the network constraint conditions generated by the network condition generation unit, and the objective function generated by the objective function generation unit.

2. The facility combination type optimization device according to claim 1, wherein
the conversion type facility condition generation unit receives an input of a piecewise linear conversion map for converting the input resource amount of the conversion type facility into the output resource amount.

3. The facility combination type optimization device according to claim 1, wherein
the conversion type facility receives resources of one or more types of energy as an input, and outputs one or more types of resources.

4. The facility combination type optimization device according to claim 1, wherein
the accumulation type facility receives resources of one or more types of energy as an input and outputs the same type of resources, and accumulates a difference therebetween.

5. The facility combination type optimization device according to claim 1, wherein
the network condition generation unit has a unit conversion function between the input resource amount and the output resource amount of the conversion type facility.

6. The facility combination type optimization device according to claim 1, wherein
any one of the input resource and the output resource of the conversion type facility and the input resource and the output resource of the accumulation type facility is electric power, and
the facility combination type optimization device further comprises
an electric power charge conversion unit that calculates a relationship between electric power with different electric power charges for each time section and a charge.

7. The facility combination type optimization device according to claim 1, further comprising:
a facility configuration generation unit that generates a facility configuration of a system in which a conversion type facility or an accumulation type facility is combined.

8. The facility combination type optimization device according to claim 7, further comprising:
a system template group for applying any conversion type facility or any accumulation type facility; and
a facility catalog group related to a conversion type facility or an accumulation type facility to be applied to any of the system template group.

9. The facility combination type optimization device according to claim 8, wherein
the facility configuration generation unit generates the facility configuration of the system by applying any conversion type facility or any accumulation type facility in the facility catalog group to any of the system template group.

10. The facility combination type optimization device according to claim 7, wherein
the facility configuration generation unit includes a facility catalog group related to a conversion type facility or an accumulation type facility, and generates a facility configuration of a system by selecting and combining one or more facilities from the facility catalog group.

11. The facility combination type optimization device according to claim 7, further comprising:
an optimal facility configuration selection unit that compares key performance indicators calculated by the optimal plan preparation unit for each of facility configurations of a plurality of systems generated by the facility configuration generation unit, and selects a facility configuration for which the most excellent key performance indicator is calculated.

12. The facility combination type optimization device according to claim 7, further comprising:
an optimal facility configuration selection support unit that displays a plurality of key performance indicators calculated by the optimal plan preparation unit in a comparable form for each facility configuration of a plurality of systems generated by the facility configuration generation unit.

13. A facility combination type optimization method comprising:
a step of, by a conversion type facility condition generation unit, using at least an input resource amount and an output resource amount for each time point as decision variables, and generating, as a constraint condition, a relationship between the input resource amount and the output resource amount for each conversion type facility, regarding a system in which a conversion type facility that receives one or more types of resources as an input and outputs one or more types of resources, or an accumulation type facility that receives one or more types of resources and outputs the same type of resources, and accumulates a difference therebetween is combined;
a step of, by an accumulation type facility condition generation unit, using at least the input resource amount and the output resource amount for each time point as decision variables, and generating a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility;
a step of, by a network condition generation unit, generating a network constraint condition that a sum of the same type of output resource amounts from the conversion type facility or the accumulation type facility is equal to or less than a sum of the same type of input resource amounts to another conversion type facility or another accumulation type facility;
a step of, by an objective function generation unit, generating an objective function related to a key performance indicator by using one or more values among the input resource amounts and the output resource amounts; and
a step of, by an optimal plan preparation unit, calculating an input resource amount and an output resource amount of the conversion type facility and the accumulation type facility for each time by using the decision variable and the constraint condition of zero or more of the conversion type facilities generated by the conversion type facility condition generation unit, the decision variable and the constraint condition of zero or more of the accumulation type facilities generated by the accumulation type facility condition generation unit, one or more of the network constraint conditions generated by the network condition generation unit, and the objective function generated by the objective function generation unit.

14. A facility combination type optimization program for causing a computer to execute:
a procedure of using at least an input resource amount and an output resource amount for each time point as decision variables, and generating, as a constraint condition, a relationship between the input resource amount and the output resource amount for each conversion type facility, regarding a system in which a conversion type facility that receives one or more types of resources as an input and outputs one or more types of resources, or an accumulation type facility that receives one or more types of resources and outputs the same type of resources, and accumulates a difference therebetween is combined;
a procedure of using at least the input resource amount and the output resource amount for each time point as decision variables, and generating a constraint condition that an accumulation resource amount that is a sum of a difference between the input resource amount and the output resource amount and an accumulation resource amount at the time point is equal to or more than a given lower limit value and equal to or less than a given upper limit value, for each accumulation type facility;
a procedure of generating a network constraint condition that a sum of the same type of output resource amounts from the conversion type facility or the accumulation type facility is equal to or less than a sum of the same type of input resource amounts to another conversion type facility or another accumulation type facility;
a procedure of generating an objective function related to a key performance indicator by using one or more values among the input resource amounts and the output resource amounts; and
a procedure of calculating an input resource amount and an output resource amount of the conversion type facility and the accumulation type facility for each time by using the decision variable and the constraint condition of zero or more of the conversion type facilities generated by the conversion type facility condition generation unit, the decision variable and the constraint condition of zero or more of the accumulation type facilities generated by the accumulation type facility condition generation unit, one or more of the network constraint conditions generated by the network condition generation unit, and the objective function generated by the objective function generation unit.
